# EUROPEAN PATENT APPLICATION

(11) **EP 4 851 906 A1**
(43) Date of publication of application: **09.12.2026**
(21) Application number: 24922338.9
(22) Date of filing: 29.01.2024
(51) Int. Cl.: G06Q 30/0241, G06Q 50/10

(54) **INFORMATION PROCESSING DEVICE FOR CREATING SET OF PAGES CONSTITUTING BOOKLET**

(71) Applicant: Memory Co., Ltd., Tokyo 104-0033 (JP)
(72) Inventor: TAKIGAWA, Eikichi, Nagoya-shi, Aichi 451-0045 (JP)
(74) Representative: Hoffmann Eitle
(86) International application number: PCT/JP2024/002598
(87) International publication number: WO 2025/163701

(57) **Abstract**

An information processing device includes; a means for creating a user page including material prepared by a user, a means for storing the created user page, a means for creating an advertiser page for advertising an advertiser's advertising object, a means for storing the created advertiser page, and a means for selecting the user page to be used as a free page in response to a user's operation from among user pages stored in the means for storing the user page, and selecting the advertiser page to be used as an advertising page in response to the user's operation from the advertiser pages stored in the means for storing the advertiser page to create a set of pages configuring booklet.

## Description

### [Technical Field]

The present invention relates to information processing when creating printed materials.

### [Background Art]

As conventional service method for printing free papers, there has been known a technology that uses a system in which a terminal device of an information source, a managing server of a management company, and an image forming device set in a store, are connected to each other by a network (see Patent Document 1).

### [Prior Art Document]

### [Patent Document]

Patent Document 1: JP 2007-094913A

### [Summary of the Invention]

### [Problems to be Solved by the Invention]

In the above-mentioned conventional technology, a user is able to select a free paper, which he/she wishes to print out, from a list of printable free papers, on the other hand, there presents a problem that a content of a free paper cannot be composed in accordance with wishes of the user.

Therefore, in one aspect, the present disclosure aims to provide a technology that can create printed materials while incorporating therewith user's hope.

### [Means for Solving the Problems]

To solve above mentioned problems, an information processing device includes a means for creating a user page including material prepared by user; a means for storing the created user page; a means for creating an advertiser page for advertising an advertiser's advertising object; a means for storing the created advertiser page; and a means for selecting the user page to be used as free page in response to a user's operation from among user pages stored in the means for storing the user page, and selecting the advertiser page to be used as an advertising page in response to the user's operation from among the advertiser pages stored in the means for storing the advertiser page to create a set of pages configuring booklet.

The information processing device according to present disclosure may further include: a means for outputting a print order for the set of pages configuring booklet.

The information processing device according to present disclosure may further include: a means for charging the advertiser for expense of printing the set of pages configuring booklet.

The information processing device according to present disclosure may further include: a means for providing a predetermined website to the set of pages configuring booklet.

The information processing device according to present disclosure, wherein the advertiser page includes a ticket for the user to receive provision of prescribed benefit.

An information processing method executed by an information processing device, the method includes: a step for creating a user page including a material prepared by user; a step for storing the created user page; a step for creating an advertiser page for advertising an advertiser's advertising object; a step for storing the created advertiser page; and a step for selecting the user page to be used as a free page in response to a user's operation from among the user pages stored in the step for storing the user page, and selecting the advertiser page to be used as advertising page in response to the user's operation from among the advertiser pages stored in the step for storing the advertiser page to create a set of pages configuring booklet.

An information processing program causing an information processing device to execute a process includes: a process for creating a user page including a material prepared by a user; a process for storing the created user page; a process for creating an advertiser page for advertising an advertiser's advertising object; a process for storing the created advertiser page; and a process for selecting the user page to be used as a free page in response to a user's operation from among the user pages stored in the process for storing the user page, and selecting the advertiser page to be used as an advertising page in response to the user's operation from among the advertiser pages stored in the process for storing the advertiser page to create a set of pages configuring booklet.

### [Advantageous Effects of Invention]

According to the present disclosure, in one aspect, it is possible to create printed materials while incorporating therewith user's hope.

### [Brief Description of the Drawings]

[FIG. 1] FIG.1 is a schematic diagram illustrating an entire configuration of an information processing system including an information processing device according to an embodiment of the present disclosure.
[FIG.2] FIG.2 is a schematic diagram illustrating a functional configuration of the information processing device illustrated in FIG.1.
[FIG.3] FIG.3 is a sequential diagram illustrating the outline of processing details related to an advertiser from among processing details of an information processing program executed in the information processing device illustrated in FIG.1.
[FIG.4] FIG.4 is a sequential diagram illustrating the outline of processing details related to a user from among the processing details of the information processing program executed in the information processing device in FIG.1.
[FIG.5] FIG.5 is a sequential diagram illustrating the outline of processing details related to printing of a custom-made advertising booklet from among the processing details of the information processing program executed in the information processing device in FIG.1.

### <Modes for Carrying Out Present Disclosure>

### (Entire configuration)

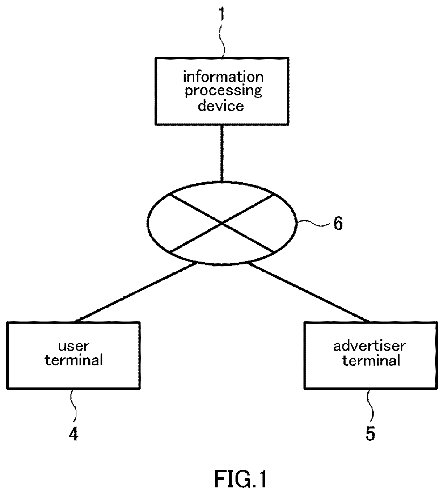

FIG.1 is a schematic diagram illustrating an entire configuration of an information processing system including an information processing device 1 according to embodiment, as an example of a specific configuration mode of the information processing device according to the present disclosure. An information processing method according to the embodiment as an example of a specific configuration of the information processing method according to present disclosure is a method executed by the information processing device 1. The information processing program according to the embodiment as an example of a specific configuration of the information processing program according to present disclosure is a program implemented by the information processing device 1.

The information processing system provides a service for creating a booklet, which includes pages created in response to a user's request and advertisements selected by a user. A booklet created by using the information processing system may be referred to as a "custom-made advertising booklet". It may be expected that a custom-made advertising booklet according to the present disclosure is, for example, made as a booklet individually used as memory, commemoration, or entertainment, and thus the number of copies within the range from about 50 to 200 is printed, or is viewed on a predetermined website.

As a mode of a custom-made advertising booklet, for example, there is exemplified a saddle stitch obtained by overlapping a single cover sheet and one or more content sheets, and then binding the double-folded section by using wire and the like. However, a mode of custom-made advertising booklet is not limited to the saddle stitch. Those may be employed, which are such as (1) Double-folded; one sheet of paper folded one time, (2) Zigzag-folded; a sheet of paper folded several times alternately, (3) "Kannon"-folded; a sheet of paper folded three times such that the left and right folded sections open from the center to both sides, (4) Tri-folded; a sheet of paper folded twice such that the left and right folded sections open to both sides, (5) Four-folded; a sheet of paper folded in the up and down directions then folded in the left and right directions. Separately, the custom-made advertising booklet also includes printed materials such as flyers, posters, leaflets, or catalogs additional to printed materials called booklet.

The hardware configuration of the information processing device 1 is optional. The information processing device 1 may be configured, for example, by one or more servers (for example, computers).

The information processing program executed in the information processing device 1 includes function for combining a page created and registered by each user and a page created and registered by each advertiser so as to configure and create one custom-made advertising booklet. The page created by each user, which configures the custom-made advertising booklet, may be referred to as a "user page", moreover the page created by each advertiser may be referred to as an "advertiser page". The advertiser page is a page to advertise the advertising object for each advertiser. Separately, the user page and the advertiser page include not only entire of one page or one sheet of paper, but also a part of one page or one sheet of paper. Regardless of either it is an entire page of one page or sheet, or a part of one page or sheet, "page" is used for explanation as a unit of handling.

The custom-made adverting booklet is configured to include a page on which the user page is printed and a page on which the advertiser page is printed. In the custom-made advertising booklet, the page on which the user page is printed may be referred to as "free page", and the page on which the advertiser page is printed may be referred to as "advertising page".

The number of free pages is not limited to a particular one as long as being one or more pages. Moreover, the number of advertising pages is not also limited to a particular one as long as being one or more pages. In the present embodiment, a case will be described as example, where a mode of the custom-made advertising booklet is a saddle stitch bound, of which two pages in total of a front cover and a reverse side of the front cover (also called the "flip side") are assigned to free pages, and other pages are assigned to advertising pages. The advertising pages may also 6 or 10 pages in total including the back cover.

By using the terminal, a user executes registration on him/her as a system user of the custom-made advertising booklet creator side so as to use service that is provided by the information processing system including the information processing device 1. The user executes registration as a system user of the custom-made advertising booklet creator side, thereby an individual user identifier is given to each user, and a password for verifying each user is set, for example.

The terminal used by user is referred to as "user terminal 4". The user terminal 4 is a device that communicates with the information processing device 1 via a communication line network 6 such as the internet, thereby enabling to use functions of the information processing program. Specifically, the user terminal 4 may be a mobile information terminal such as a smartphone. Moreover, various personal computers such as tablet type and desktop type may be also employed. In FIG.1, the single user terminal 4 is illustrated, however, the multiple user terminals 4 may be employed, which use functions of the information processing program by communicating with the information processing device 1.

An advertiser executes registration by using the terminal as system user on an advertisement provider side so as to use service provided by the information processing system including the information processing device 1. The advertiser executes registration as a system user on an advertisement provider side, thereby identifier is given to each advertiser, and a password for verifying each advertiser is set, for example.

The terminal used by advertiser is referred to as "advertiser terminal 5". The advertiser terminal 5 is a device that communicates with the information processing device 1 via communication line network 6 such as the internet thereby enabling to use functions of the information processing program. Specifically, the advertiser terminal 5 may be also a mobile information terminal such as a smartphone. Moreover, various personal computers such as tablet type or desktop type may be also employed, separately, in FIG.1, the single advertiser terminal 5 is illustrated, however, the multiple advertiser terminals 5 may be also employed, which use functions of the information processing program by communicating with the information processing device 1.

The advertiser, for example, creates an advertiser page for advertising products which the advertiser is selling, service which the advertiser is providing, and/or stores which the advertiser is running so as to provide the advertiser page as advertising.

Herein, functions of the information processing program may be also configured by dedicated application installed on the information processing device 1 configured by one or more servers (namely, computers). Moreover, functions of the information processing program may be also configured by dedicated application installed on one or more servers (namely, computers), dedicated application installed on the user terminal 4, and dedicated application installed on the advertiser terminal 5. Therefore, the information processing device 1 may be also configured by one or more servers (namely, computers), the user terminal 4, and the advertiser terminal 5. In this case, it may be also mentioned that the entire of a processing system is configured as an information processing system including one or more servers (namely, computers), a terminal for a user, and a terminal for an advertiser.

### (Configuration of Information Processing Device)

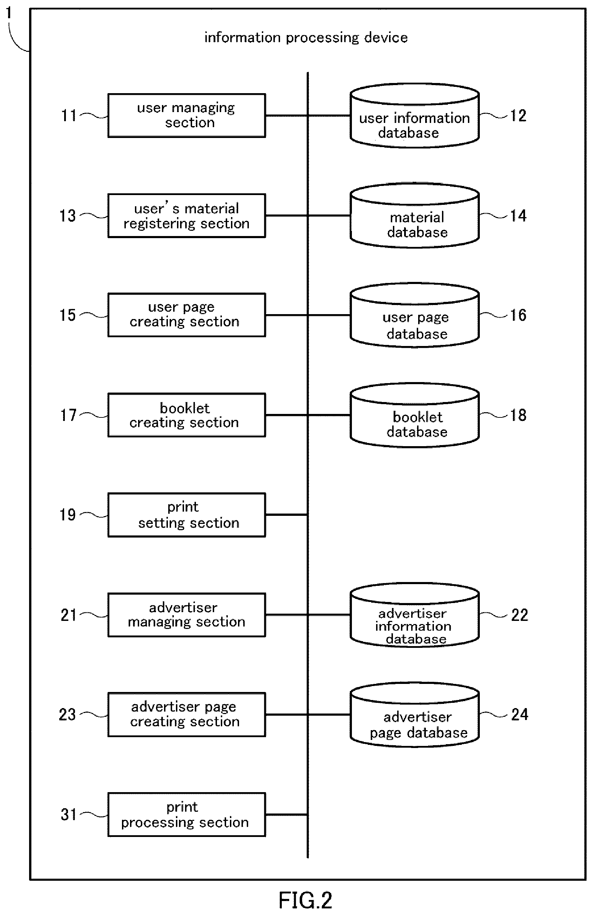

FIG.2 is a schematic diagram illustrating a functional configuration of the information processing device 1 according to embodiment.

The information processing device 1 includes a configuration for mainly executing processes corresponding to user's operations, a configuration for mainly executing processes corresponding to advertiser's operations, and a configuration for mainly executing processes corresponding to printing a custom-made advertising booklet.

### (Configuration Corresponding to User)

The information processing device 1 includes a user managing section 11, a user information database 12, a user's material registering section 13, a material database 14, a user page creating section 15, and a user page database 16, as a configuration for mainly executing processes corresponding to user's operations.

A user operates the user terminal 4 so as to communicate with the information processing device 1, thereby using the function of the information processing device 1 (in other words, the function of the information processing program executed in the information processing device 1) so as to create a custom-made advertising booklet.

A user may use web browser application introduced to the user terminal 4 and may communicate with the information processing device 1 so as to use the function of the information processing device 1, or a user may use dedicated application installed on the user terminal 4 and may communicate with the information processing device 1 so as to use the function of the information processing device 1.

The user managing section 11 executes a process related to registration of a user that is going to use the information processing system or verification of each user. The user managing section 11 registers user information related to registration or verification of a user and the like, in the user information database 12 in association with a user identifier.

The user information database 12 stores therein information related to verification of a user identifier, a password, and the like; and information related to an individual attribute, which are registered by the user managing section 11 for each user.

The individual attribute of a user is, for example, an age, a gender, place of residence, etc. and his/her preference may be also included therein. A user inputs his/her individual attribute or preference when executing registration of the user in the information processing system. Information based on contents which have been input and sent by a user is stored in the user information database 12 as a user's attribute.

The user's material registering section 13 executes a necessary process when a user sends and registers material to be included in a user page. Material that has been prepared by a user and that is sent and registered by the user may be referred to as "user preparation material". The user preparation material includes, for example, image data of pictures captured by a user and image data of illustration created by the user.

The user's material database 13 registers material which have been sent by a user, in the material database 14 in association with a user identifier of the user.

In the material database 14, material registered by the user's material registering section 13 is stored in association with a user identifier as a user preparation material.

The user page creating section 15 executes a process needed in a case where a user creates and registers a user page.

For example, a user page is created as contents including text such as a title of a booklet and text, and image such as a picture and illustration. When creating a user page, a user reads a user preparation material that is stored in the material database 14 in association with his/her user's identifier.

As materials to be included in a user page, freely usable materials for all users may be prepared in advance apart from the user preparation materials. The freely usable materials for all users may be referred to as "freely usable materials". The freely usable materials are prepared and stored in the material database 14 by an operator of the information processing system. In this case, a user may read and use freely usable materials stored in the material database 14 in addition to user preparation materials so as to create a user page.

The user page may be also edited freely by users, including layout of text and images, or may be also edited by a user inputting text or selecting an image in accordance with a template prepared in advance. In a case where templates are prepared in advance, for example, a template of each of pages assigned to free page may be prepared in advance. In the present embodiment, specifically, a template for a front cover and a template for a rear plane of the front cover may be prepared in advance. In a case where templates are prepared in advance, a template to be used as layout of a user page may be selected by a user from among multiple kinds of templates that are prepared in advance.

In the present embodiment, the user page creating section 15 creates a user page for cover page assigned as free page assigned to a free page, and a user page for rear plane of the cover page similarly assigned to a free page.

The user page creating section 15 registers a user page created by a user, in the user page database 16 in association with a user identifier of the user.

In the user page database 16, a user page registered by the user page creating section 15, is stored in association with a user identifier.

### (Configuration Corresponding to Advertiser)

The information processing device 1 includes an advertiser managing section 21, an advertiser information database 22, an advertiser page creating section 23, and an advertiser page database 24, as a configuration for mainly executing processes corresponding to advertiser's operations.

The advertiser operates the advertiser terminal 5 and communicates with the information processing device 1 so as to create advertiser page by using functions of the information processing device 1 (in other words, functions of the information processing program executed in the information processing device 1).

The advertiser may use web browser application introduced to the advertiser terminal 5 and further communicates with the information processing device 1 so as to use functions of the information processing device 1, or an advertiser may use dedicated application installed on the advertiser terminal 5 and further communicate with the information processing device 1 so as to use functions of the information processing device 1.

The advertiser managing section 21 executes a process related to registration of an advertiser who is going to use the information processing system and verification of each advertiser, and further executes a process related to management of budget and charge for each advertiser. The advertiser managing section 21 also registers the advertiser information related to registration and verification of advertisers, and budget and charge thereof in the advertiser information database 22 in association with an advertiser identifier.

The advertiser database 22 stores therein information related to verification such as a user identifier and a password, and information related to budget and charge, for each advertiser, which are registered by the advertiser managing section 21.

Herein, expense of printing in a case where a custom-made advertising booklet is made and printed is proportionately shared by advertisers of an advertiser page that is used as an advertising page of the above-mentioned custom-made advertising booklet.

The budget of each advertiser stored in the advertiser information database 22 is the amount of money which the corresponding advertiser allows as a price for using service provided by the information processing system including the information processing device 1. The budget of each advertiser is, for example, designated as the amount by a month or a year. An advertiser inputs the budget amount when registering the advertiser in the information processing system. Next, the budget amount that have been input and sent by the advertiser is stored in the advertiser information database 22, as a budget of each advertiser, which is a part of advertiser information. The budget of each advertiser may be changed and updated by the above-mentioned advertiser.

Moreover, a charge for each of advertisers stored in the advertiser information database 22 is a corresponding proportional share of expense for printing a custom-made advertising booklet, which is generated for the corresponding advertiser of an advertiser page when the advertiser page is selected as an advertising page by a user and the custom-made advertising booklet is made and printed. Specifically, in a case where an advertiser page is selected as an advertising page by a user and a custom-made advertising booklet is made and printed, expense for printing the custom-made advertising booklet is proportionally shared in accordance with the number of advertising pages printed in the custom-made advertising booklet, and the proportionally shared expense for printing is charged on each advertiser of the advertising page as a proportional share of expense for print. The charge for each advertiser is stored in the advertiser information database 22 so that the sum of charges during a budget term of the corresponding advertiser is calculatable.

Separately, the expense for operating information processing system may be also included in the charge occurring to each advertiser. For example, the expense for operating information processing system can be also included in the expense for printing the custom-made advertising booklet, then the expense for printing the custom-made advertising booklet can be also included in the charge for each advertiser as the proportional shared expense for printing,

The advertiser page creating section 23 executes a process to be needed when an advertiser creates and registers an advertiser page.

The advertiser page is created as contents, for example, which includes text of name and/or explanation of an advertising object, etc. and an image of photo or illustration. The advertiser page is created as contents, for example, which is completed within a sheet/space corresponding to one page of the custom-made advertising booklet, in other words, in one page unit.

A condition may be set, such as an individual attribute of a user who requests or permits use of an advertiser page, for an advertiser page which an advertiser made. The condition that is set by an advertiser for each advertiser page, such as the individual attribute of user who requests or permits use of advertiser page, may be referred to as "user attribute condition". The user attribute condition is, for example, age, gender, place of residence, etc. In the present embodiment, a case is supposed, where a user attribute condition is set by an advertiser for each advertiser page.

It is conceivable that a user attribute condition is set, for example, in consideration of characteristics of a product, service, and/or a store, which is an advertising object of the advertising page, and an attribute of a customer having a high possibility to use the product, to use the service, and/or to visit the store, or in consideration of an area where the advertiser especially wants to promote a product, service, and/or a store, which is an advertising object on the advertising page. In other words, it is conceivable that the user attribute condition is set in consideration of a consumer segment that is a target of a product, service, and/or a store being an advertising object of the advertising page.

In a case where a user's individual attribute is set to include his/her preference, a user attribute condition may be set to include preference of a user who requests and permits use of an advertiser page.

A user attribute condition may be set to include contents of a user page requested as an advertiser. Specifically, for example, a kind and a content may be included, which is considered to be preferable by an advertiser as contents of text described in the user page, and/or contents of a picture that is a user preparation material to be used in a user page, for example.

The maximum value of the number of prints when printing a custom-made advertising booklet that is made by using the advertiser page, may be set for an advertiser page made by an advertiser. In other words, the maximum value of print is the maximum value of the number of prints of a custom-made advertising booklet when a user uses an advertiser page, and is the maximum value of the number of prints of each of custom-made advertising booklets that are created by using the advertiser page. It is conceivable that the maximum value of the number of prints is set, for example, in consideration of budget of an advertiser. Separately, the number of prints of custom-made advertising booklet may be a predetermined number that is determined in advance. The number of prints of a custom-made advertising booklet is not limited to a specific number, however, it is conceivable to be set to approximately 50 to 200 copies. In the present embodiment, the case is supposed, where the maximum value of the number of prints of a custom-made advertising booklet is set by an advertiser.

The advertiser page creating section 23 registers a combination of an advertiser page created and set by an advertiser, a user attribute condition, and the maximum value of the number of prints of a custom-made advertising booklet, in the advertiser page database 24 in association with an advertiser identifier of the advertiser.

Separately, an advertiser page may be configured so that contents that have been already created as advertisement or contents that have been created by another device are registered (in other words, an electronic file is uploaded) as an advertiser page via the advertiser page creating section 23.

In the advertiser page database 24, an advertiser page registered by the advertiser page creating section 23 is stored as an advertiser page of which every page is independent respectively, in association with an advertiser identifier and a user attribute condition, and the maximum value of the number of prints of a custom-made advertising booklet.

### (Configuration Corresponding to User)

The information processing device 1 further includes a booklet creating section 17, a booklet database 18, and a print setting section 19, as a configuration for mainly executing a process corresponding to user's operations.

The booklet creating section 17 executes a process needed for a user to create and register a custom-made advertising booklet.

The mode of a custom-made advertising booklet may be configured so that each of a mode of bookbinding, and assignment of pages to respective free page and advertising page, is defined to corresponding one option in advance. A mode of a custom-made advertising booklet may be selected by a user from among multiple kinds. When a mode of a custom-made advertising booklet is selected from among multiple kinds, a user may select a mode of bookbinding of the custom-made advertising booklet, or may set assignment to a free page.

On the basis of predetermined setting or selection of a user, the booklet creating section 17 presents information on page numbers or sheets/spaces assigned to free pages and advertiser pages according to a bookbinding mode of a custom-made advertising booklet.

A user selects a user page and an advertising page so as to create (in other words, edit) a custom-made advertising booklet.

A user selects a user page to be used as a free page in a custom-made advertising booklet. Specifically, a user selects a user page to be used as a free page from among user pages stored in the user page database 16. In the present embodiment, a user selects a user page for a front cover and a user page for rear plane of the front cover from among user pages stored in the user page database 16 in association with his/her user identifier.

A user selects advertiser page to be used as an advertising page in custom-made advertising booklet. Specifically, a user selects an advertiser page to be used as each advertising page from among advertising pages stored in the advertiser page database 24. When an advertiser page is selected by a user, it can be configured so that an advertiser is first selected, next, an advertiser page to be used as each advertising page is selected from among advertiser pages that are created by the selected advertiser.

The booklet creating section 17 may be configured to contrast a user's individual attribute and a user attribute condition associated with each advertiser page with reference to the user's individual attribute stored in the user information database 12 and the user attribute condition stored in the advertiser page database 24 so as to set an advertiser page alone, whose user's individual attribute satisfies the user attribute condition, to a selectable advertiser page.

In a case where preference is included in a user's individual attribute and a user attribute condition, the booklet creating section 17 may be configured to preferentially (in other words, on the top) display an advertiser page in which a degree of matching is high between preference in the user's individual attribute and preference of the user attribute condition.

The booklet creating section 17 registers a user page to be used as a free page selected by a user and an advertiser page to be used as an advertising page, in the booklet database 18 in association with a user identifier of the user.

A combination of a user page to be used as a free page selected by user and an advertiser page to be used as an advertising page may be referred to as "a set of pages configuring booklet". In other words, the set of pages configuring booklet is a set of pages configuring one custom-made advertising booklet. Individual identifiers are given to respective sets of pages configuring booklet. In the present embodiment, the booklet creating section 17 registers, in the booklet database 18 as the set of pages configuring booklet, a user page to be used as a front cover, a user page to be used as rear plane of the front cover, and an advertiser page to be used as each advertising page in association with a user identifier and a booklet identifier.

In the booklet database 18, a set of pages configuring booklet registered by the booklet creating section 17 is saved in association with a user identifier and a booklet identifier.

The print setting section 19 executes a process needed for user to execute setting related to printing a custom-made advertising booklet.

In a case where a user requests to print a custom-made advertising booklet created by the user, the user selects a custom-made advertising booklet made by him/herself, and designates the number of prints of the custom-made advertising booklet to executes order for printing. For each advertiser page used as an advertising page of a custom-made advertising booklet, the number of prints is designated within a range that does not exceed the maximum value of the number of prints of the custom-made advertising booklet, which is stored in the advertiser page database 24. Separately, the number of prints of an custom-made advertising booklet may be set to the above-mentioned predetermined number, in this case, a user selects a custom-made advertising booklet so as to execute order for printing.

In a case where the order for printing of a custom-made advertising booklet is executed by a user, the print processing section 19 outputs, as an order for printing a custom-made advertising booklet, a booklet identifier of a set of pages configuring a booklet that is configuring the custom-made advertising booklet, and the number of the custom-made advertising booklets.

### (Configuration Corresponding to Print)

The information processing device 1 includes a print processing section 31 as a configuration for mainly executing a process corresponding to print of a custom-made advertising booklet, in response to a user's operation.

The print processing section 31 receives an input of a booklet identifier of a set of pages configuring booklet and the number of prints of a custom-made advertising booklet, which are outputted from the print setting section 19, and further reads the set of pages configuring booklet associated with the booklet identifier from the booklet database 18.

The information processing device 1 may be configured to include a printing machine (not illustrated) for printing a custom-made advertising booklet, or not to include a printing machine for printing a custom-made advertising booklet.

In a case where the information processing machine 1 includes a printing machine for printing a custom-made advertising booklet, the print processing section 31 transmits data of a set of pages configuring booklet to the printing machine, and further designates the number of prints of the custom-made advertising booklet so as to cause the printing machine to print the custom-made advertising booklet.

In a case where the information processing device 1 does not include a printing machine for printing a custom-made advertising booklet, the print processing section 31 may be configured to, for example, provide data of a set of pages configuring booklet to a printing machine, and further designate the number of prints of a custom-made advertising booklet via a communication line network. In a case where the information processing machine 1 does not include a printing machine for printing a custom-made advertising booklet, it can be configured so that data of a set of pages configuring booklet is provided to the printing machine via a storage medium, or the number of prints of a custom-made adverting booklet is manually designated. It can be also configured so that the process for printing a custom-made advertising booklet is executed via a manager of the information system.

The print processing section 31 divides the expense of print determined based on the number of prints of a custom-made advertising booklet and the like by the number of advertiser pages used as an advertising page of a set of pages configuring booklet to be printed so as to calculate a proportional shared expense of print per one page of an advertiser page. The print processing section 31 adds the calculated proportional shared expense of print, to a charge for each advertiser stored in the advertiser information database 22, as a charge of the adverting page for a corresponding advertiser.

### (Process of Information Processing Device)

The information processing device 1 executes a process related to the advertiser, a process related to a user, and a process related to print of a custom-made advertising booklet.

### (Detail of Process Corresponding to Advertiser)

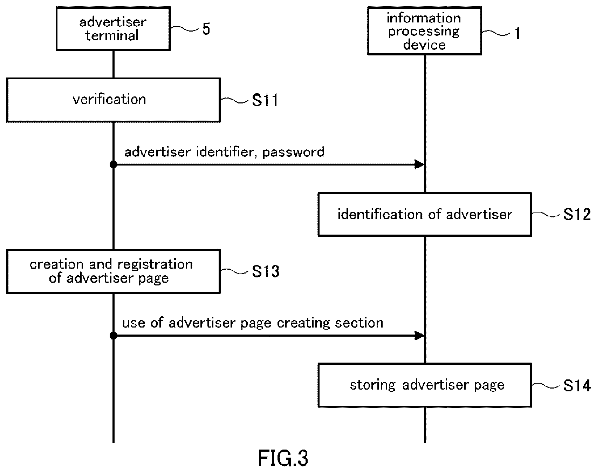

FIG.3 is a sequential diagram illustrating the outline of processing details related to an advertiser from among processing details of an information processing program executed in the information processing device according to embodiment.

An advertiser operates the advertiser terminal 5, for example, and further inputs an advertiser's advertiser identifier and a password so as to verify the advertiser (Step S11) and further to enable to use the information processing system.

The advertiser managing section 21 of the information processing device 1 identifies the advertiser based on the advertiser identifier and the password that are sent from the advertiser terminal 5, with reference to the advertiser information database 22 (Step S12).

The advertiser operates the advertiser terminal 5 so as to cause the advertiser page creating section 23 to create the advertiser page, and further sets a user attribute condition of an advertiser page and the maximum value of the number of prints of a custom-made advertising booklet so as to register them as the advertiser's advertiser page (Step S13).

The advertiser page database 24 stores therein, in association with the advertiser identifier, a combination of the advertiser page, the user attribute condition, and the maximum value of the number of prints of the custom-made advertising booklet, which are transmitted by the registration process by the advertiser page creating section 23 (Step S14).

### (Detail of Process Corresponding to User)

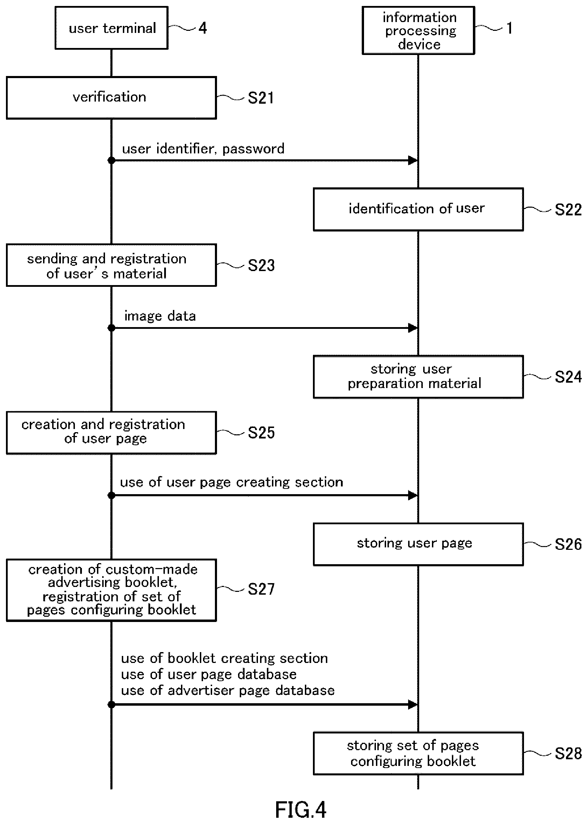

FIG.4 is a sequential diagram illustrating the outline of processing details related to a user from among the processing details of the information processing program executed in the information processing device according to embodiment.

A user operates the user terminal 4, for example, and further inputs a user's user identifier and a password so as to verify the user (Step S21), and further to enable to use the information processing system.

The user managing section 11 of the information processing device 1 identifies the user on the basis of the user identifier and the password sent from the user terminal 4 with reference to the user information database 12 (Step S22).

The user operates the user terminal 4 to send image data of a picture captured by him/herself or image data of illustration created by him/herself so as to register them via the user's material registering section 13 (Step S23).

The user's material registering section 13 registers, in association with the user identifier, the image data sent from the user terminal 4 in the material database 14 as a user preparation material (Step S23).

The material database 14 stores therein the user preparation material transmitted by the registration process by the user's material registering section 13, in association with the user identifier (Step S24).

The user operates the user terminal 4 and further causes the user page creating section 15 to create a user page, and further registers the created user page as a user's user page (Step S25).

The user page database 16 stores therein the user page transmitted by registration process by the user page creating section 15 in association with the user identifier (Step S26).

The user operates the user terminal 4 and further causes the booklet creating section 17 to create a custom-made advertising booklet, and further registers the created custom-made advertising booklet as a user's set of pages configuring booklet (S27). Specifically, the user selects a user page to be used as free page from among user pages stored in the user page database 16 and further selects an advertiser page to be used as an advertising page from among advertiser pages stored in the advertiser page database 24.

The booklet database 18 stores therein the set of pages configuring booklet transmitted by the registration process by the booklet creating section 17 in association with the user identifier and the booklet identifier, as one custom-made advertising booklet (Step S28).

Herein, confirmation of details of a set of pages configuring booklet may be executed on an advertiser of each advertiser page used as an adverting page in a custom-made advertising booklet created (in other words, edited) by the user. In this case, the advertiser may confirm a free page or an advertising page included in the set of pages configuring booklet so as to refuse printing of the advertiser's advertiser page on the custom-made advertising booklet in a case where the advertiser determines that the set of pages configuring booklet includes an unpreferable free page or an unpreferable advertising page as a booklet on which an advertiser page related to an advertiser's product, service, or a store is printed. In this case, a user is informed of the refusal of print of an advertiser page by an advertiser, and the user re-selects an advertiser page to be used as an advertising page corresponding to the portion whose printing is refused.

### (Detail of Process Corresponding to Print)

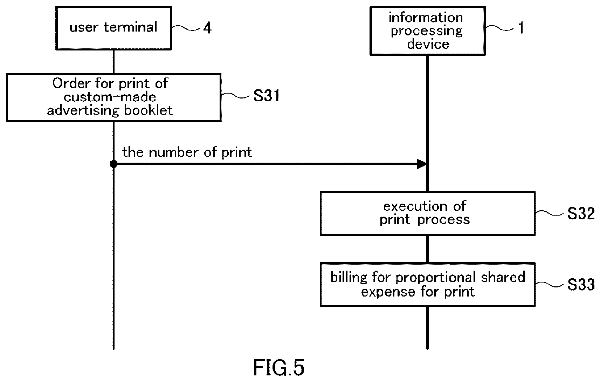

FIG.5 is a sequential diagram illustrating the outline of processing details related to printing of custom-made advertising booklet from among the processing details of the information processing program executed in the information processing device 1 according to embodiment.

A user operates the user terminal 4 so as to select a custom-made advertising booklet that is created by him/herself and further is stored in the booklet database 18, and further sends the number of prints (Step S31). Thus, a print order for the custom-made advertising booklet (specifically, the set of pages configuring booklet) is given to the print processing section 31 via the print setting section 19.

In a case where the information processing device 1 includes a printing machine for printing a custom-made advertising booklet, as execution of a print process, the print processing section 31 transmits data of the set of pages configuring booklet to the printing machine and further designates the number of prints of the custom-made advertising booklet. Moreover, in a case where the information processing device 1 does not include a printing machine for printing a custom-made advertising booklet, as execution of a print process, the print processing section 31 transmits data of the set of pages configuring booklet to a printing machine and further designates the number of prints of the custom-made advertising booklet. The data of the set of pages configuring booklet is also provided to the printing machine via the storage medium, as execution of a print process, or the number of prints of custom-made advertising booklet is manually designated. Separately, for example, it can be configured so that provision of data of the set of pages configuring booklet to the printing machine or designation of the number of prints of a custom-made advertising booklet is executed via a manager of the information processing system. A custom-made advertising booklet is printed by the printing machine (Step S32).

In a case where a custom-made advertising booklet is printed, a proportional shared expense for print is charged on an advertiser of each advertiser page used as an advertising page in the custom-made advertising booklet (Step S33). Specifically, the print processing section 31 calculates a proportional shared expense for print per one page of an advertiser page on the basis of an expense for print of custom-made advertising booklet and the number of advertiser page in the set of pages configuring booklet to be printed. Then the print processing section 31 adds the calculated proportional shared expense for print to the charge for each advertiser stored in the advertiser information database 22, as a charge for a corresponding advertiser of the advertiser page.

Separately, in a case where the total amount of charge for each advertiser stored in the advertiser database 22 exceeds or nearly exceeds a budget amount of the advertiser, the booklet creating section 17 may be configured so that an advertising page of the advertiser whose total amount of charge exceeds or nearly exceeds the budged amount is not displayed so as not to be selected when the user selects the advertiser page to be used as an advertising page.

The custom-made advertising booklet printed in accordance with a print order by a user is sent to the user by mail, for example.

It can be also configured so that the printed custom-made advertising booklet is sent by mail, for example, to an advertiser of each advertiser page used as an advertising page in the custom-made advertising booklet that is an object for printing by a user's print order. In this case, the number of copies needed for sending to advertisers is added to the number of prints of the custom-made advertising booklet designated by the user, so as to print the custom-made advertising booklet.

### (Expected Use Scenario)

Various reasons are expected as motivation why a user creates a custom-made advertising booklet and a purpose of use of a custom-made advertising booklet, the motivation or the purpose of use when the invention is used, is not limited to a specific reason. However, in order to improve understanding of the significance of the present invention, the expectation of use scenario of the present invention will be exemplified as just an example.

### (Expectation 1)

For example, there is expected a case where a user creates a custom-made advertising booklet before going on a trip as a guidebook for going on a trip,.

Specifically, for example, a user uses a user's picture as a user preparation material and writes comments related to the picture or text of the trip overview so as to create a user page, and further selects the above-mentioned user page as a free page.

A user also selects, as an advertising page, an advertiser page of a product which the user wants to purchase on the trip, service which user wants to experience, a restaurant where the user wants to dine, and the like.

Thus, a custom-made advertising booklet as a guidebook when going on a trip, is created. A user may carry the created custom-made advertising booklet as a guidebook for his/her trip so as to distribute it to his/her family, friend, or acquaintance. In a case where the printed custom-made advertising booklet is further sent to an advertiser of each advertiser page used as advertising page in a custom-made advertising booklet, the advertiser may place it in an advertiser's store or distribute it at a storefront so as to use it as a promoting item.

An advertiser page may be configured to include a coupon (that is, a ticket for providing prescribed benefit to a user). An advertiser page may include, for example, a coupon that is available in purchasing a product that is an advertising object of the advertising page, a coupon that is available in receiving service, a coupon that is available in dining in a restaurant, and the like. In this case, a user may select an advertiser page including a coupon, as an advertising page, and further may create a custom-made advertising booklet so as to carry it when going on a trip., and the user may purchase a product, receive service, and dine in a restaurant by using the coupon at a trip destination. In this case, that is, the custom-made advertising booklet has a function as a coupon magazine.

It may be configured so that a coupon related to an advertising object of an advertiser page selected as an advertising page is issued by a user creating the advertising page in the custom-made advertising booklet before he/she goes on a trip. In this case, at a trip destination, the user uses a coupon having been issued before the trip, or captures photos at a sightseeing spot or a store where the user used the coupon in the trip destination. The user uses the picture of the trip destination as a user preparation material, and further writes comments related to the picture, articles of the store where the user used the coupon, or text of an event at the trip destination, so as to create a user page, and further selects, as free page, the user page including the articles or the picture of the trip destination, especially the picture of the store where the user used the coupon. It can be configured so that a custom-made advertising booklet may be created with the use of the advertising page created before the trip and the free page created after the trip.

Points may be given to a user by the user creating a custom-made advertising booklet. Details of a coupon (in other words, details of benefit) given to the user may be changed, depending on the points given to the user. The points given to a user is stored in the user information database 12.

### (Expectation 2)

A case is expected where a user creates a custom-made advertising booklet after a trip as memory of the trip.

Specifically, for example, a user goes on a trip to any destination and captures photos at a sightseeing spot or a store where the user stopped by at a trip destination. Then, the user uses photos of the trip destination as a user preparation material and writes comments of an event related to the photos or text of the event at the trip destination so as to create a user page, and then selects, as free page, a user page including the photos at the trip destination.

The user also selects, as an advertising page, an advertiser page of a product which the user purchased at the trip destination, service which the user experienced, or the store where the user dined.

Thus, there is created a custom-made advertising booklet as memory of a user's trip. A user may stock the created custom-made advertising booklet as memory of the trip, or the user may distribute it to his/her family, friend, or acquaintance. In a case where a printed custom-made advertising booklet is further sent to an advertiser of each advertiser page used as an advertising page in the custom-made advertising booklet, the advertiser may use it as a promoting item by placing it in an advertiser's store or distributing it at storefront.

Separately, a case where a user creates and uses a custom-made advertising booklet, is not limited to a situation related to a trip, for example, may be a common situation where a user uses the user's local store.

### (Action and Effectiveness)

In accordance with the information processing device 1, the information processing method, and the information processing program according to the embodiment, a user is able to use a user preparation material prepared by the user so as to create a free page, and further is able to select an advertiser page to be used as an advertising page, so that it is possible to create a printed material taking into account of a user's request.

In accordance with the information processing device 1, the information processing method, and the information processing program according to the embodiment, a user is able to use the a user preparation material prepared by the user so as to create a free page, this enables the user to record user's memory or memorial.

In accordance with the information processing device 1, the information processing method, and the information processing program according to the embodiment, it is possible to advertise to a consumer segment where a product, service, or a store targets to, and further advertise effectively.

So far, the embodiment of the present disclosure has been described, specific components of the present disclosure are not limited to the above-mentioned embodiment, an embodiment that is modified or changed to an extent not departing from the gist of the present invention may be also included in present invention.

For example, in the above-mentioned embodiment, the custom-made advertising booklet is printed, it can be configured so that the custom-made advertising booklet (specifically, the set of pages configuring booklet stored in the booklet database 18) may be viewed on a predetermined website in response to a user's request. In this case, it can be configured so that the custom-made advertising booklet may be viewed on a predetermined website while being printed, or only viewing of the custom-made advertising booklet on the predetermined website may be possible without printing it. )In a case where a custom-made advertising booklet is viewed on website, it can be generally closed to public to be viewed by a user alone who has created it, or can be generally open to public to be viewed by everybody. In a case where a custom-made advertising booklet is viewed on a website, movie data of video captured by each user can be included, or recorded sound data such as sound recorded by each user can be also included in the user preparation materials. A user also can set a range of viewers who can access a custom-made advertising booklet created by the user, for example whether setting not to generally open in public or setting to generally open in public. IN a case where it is configured so that a custom-made advertising booklet is viewed on a predetermined website, the information processing device 1 can includes a means for transmitting and providing data of a set of pages configuring a booklet stored in the booklet database 18 to the predetermined website.

### [List of Reference Signs]

- 1: Information processing device
- 11: User managing section
- 12: User information database
- 13: User's material registering section
- 14: Material database
- 15: User page creating section
- 16: User page database
- 17: Booklet creating section
- 18: Booklet database
- 19: Print setting section
- 21: Advertiser managing section
- 22: Advertiser information database
- 23: Advertiser page creating section
- 24: Advertiser page database
- 31: Print processing section
- 4: User terminal
- 5: Advertiser terminal
- 6: Communication line network

## Claims

1. An information processing device, comprising
a means for creating a user page including material prepared by user;
a means for storing the created user page;
a means for creating an advertiser page for advertising an advertiser's advertising object;
a means for storing the created advertiser page; and
a means for selecting the user page to be used as free page in response to a user's operation from among user pages stored in the means for storing the user page, and selecting the advertiser page to be used as an advertising page in response to the user's operation from among the advertiser pages stored in the means for storing the advertiser page to create a set of pages configuring booklet.

2. The information processing device according to claim 1, further comprising:
a means for outputting a print order for the set of pages configuring booklet.

3. The information processing device according to claim 1, further comprising:
a means for charging the advertiser for expense of printing the set of pages configuring booklet.

4. The information processing device according to claim 1, further comprising:
a means for providing a predetermined website to the set of pages configuring booklet.

5. The information processing device according to claim 1, wherein
the advertiser page includes a ticket for the user to receive provision of prescribed benefit.

6. An information processing method executed by an information processing device, the method comprising:
a step for creating a user page including a material prepared by user;
a step for storing the created user page;
a step for creating an advertiser page for advertising an advertiser's advertising object;
a step for storing the created advertiser page; and
a step for selecting the user page to be used as a free page in response to a user's operation from among the user pages stored in the step for storing the user page, and selecting the advertiser page to be used as advertising page in response to the user's operation from among the advertiser pages stored in the step for storing the advertiser page to create a set of pages configuring booklet.

7. An information processing program causing an information processing device to execute a process comprising:
a process for creating a user page including a material prepared by a user;
a process for storing the created user page;
a process for creating an advertiser page for advertising an advertiser's advertising object;
a process for storing the created advertiser page; and
a process for selecting the user page to be used as a free page in response to a user's operation from among the user pages stored in the process for storing the user page, and selecting the advertiser page to be used as an advertising page in response to the user's operation from among the advertiser pages stored in the process for storing the advertiser page to create a set of pages configuring booklet.
